# EUROPEAN PATENT APPLICATION

(11) **EP 4 398 003 A1**
(43) Date of publication of application: **10.07.2024**
(21) Application number: 24150855.5
(22) Date of filing: 09.01.2024
(51) Int. Cl.: G02B 1/04

(54) **COMPOSITION FOR CONTACT LENS AND CONTACT LENS**

(30) Priority: 09.01.2023 TW 112100906; 17.11.2023 TW 112144583
(71) Applicant: Visco Vision Inc., Taoyuan City 33341 (TW)
(72) Inventor: CHUANG, Chen-Chia, 33341 Taoyuan City (TW); CHEN, Li-Yu, 33341 Taoyuan City (TW)
(74) Representative: dompatent von Kreisler Selting Werner - Partnerschaft von Patent- und Rechtsanwälten mbB

(57) **Abstract**

A composition for a contact lens and a contact lens are provided. The composition for a contact lens includes a siloxane mixture, a tris(trimethylsiloxy)silypropyl methacrylate, and a hydrophilic monomer. The siloxane mixture includes a first siloxane monomer and a second siloxane monomer. The first siloxane monomer has an acryloyl group. The second siloxane monomer has two acryloyl groups. A weight ratio of the siloxane mixture to the tris(trimethylsiloxy)silypropyl methacrylate is between about 27.5:1 and about 0.29:1.

## Description

### Field of the Invention

The disclosure relates to a composition for contact lens and a contact lens made from the composition.

### Description of the Related Art

Soft contact lenses are popular with people due to their cosmetic, comfort and convenience properties. When evaluating the quality of soft contact lenses, oxygen permeability (Dk) and mechanical property are very important factors. The oxygen permeability may express the ability of the lens to let oxygen pass through the lens. Corneal hypoxia, corneal injury, eye infection, wearing comfort and other problems may be improved by increasing the oxygen permeability. The mechanical property may express whether the contact lens is strong enough to withstand the user's operations such as wearing, taking off, and cleaning without breaking. Elongation is one of the index for evaluating mechanical property. Low elongation may cause the contact lens to break easily, affecting the durability and lifespan of the contact lens. However, conventional soft contact lenses are difficult to balance the oxygen permeability and elongation. The increase of oxygen permeability may reduce the elongation to the point of making contact lenses prone to breakage; the increase of elongation may reduce the oxygen permeability and thus affect the wearing comfort.

Therefore, how to get balance between the oxygen permeability and elongation of soft contact lens in the appropriate range is still an urgent problem to be solved.

### SUMMARY

According to an embodiment, a composition for contact lens is provided. The composition for a contact lens includes a siloxane mixture, a tris(trimethylsiloxy)silypropyl methacrylate, and a hydrophilic monomer. The siloxane mixture includes a first siloxane monomer and a second siloxane monomer. The first siloxane monomer has an acryloyl group. The second siloxane monomer has two acryloyl groups. A weight ratio of the siloxane mixture to the tris(trimethylsiloxy)silypropyl methacrylate is between about 27.5:1 and about 0.29:1.

According to an embodiment, a contact lens is provided. The contact lens is made from a composition of the present disclosure.

The above and other embodiments of the disclosure will become better understood with regard to the following detailed description of the non-limiting embodiment(s).

### DETAILED DESCRIPTION

For facilitating understanding the above embodiments and other purposes, characteristics and advantages of the present disclosure, preferred embodiments are disclosed in detail as the following.

According to an embodiment of the present disclosure, a composition for contact lens is provided. The composition includes a siloxane mixture, a tris(trimethylsiloxy)silypropyl methacrylate (TRIS), and a hydrophilic monomer.

### <Siloxane Mixture>

The siloxane mixture includes a first siloxane monomer and a second siloxane monomer. The first siloxane monomer is different from the second siloxane monomer.

### <First Siloxane Monomer>

The first siloxane monomer has an acryloyl group. For example, the acryloyl group can be represented as 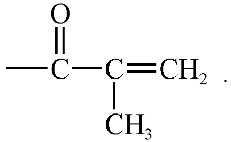 A number-average molecular weight of the first siloxane monomer is about 500~10000. In an embodiment, the first siloxane monomer is represented by the following formula (1).

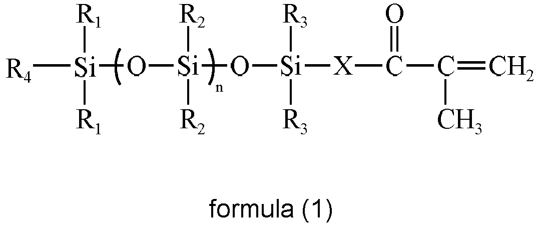

In the formula (1), R₁, R₂ and R₃ are each independently C₁-C₄ alkyl group; R₄ is C₁-C₆ alkyl group; n is 4~80; X is represented by the following formula (1-1), the following formula (1-2) or the following formula (1-3). In the formula (1-1), formula (1-2) and formula (1-3), the sign * on the left of each formula represents a chemical bond with Si in the formula (1), and the sign * on the right of each formula represents a chemical bond with C in the formula (1).

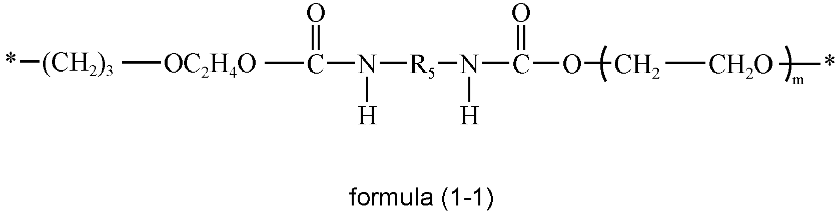

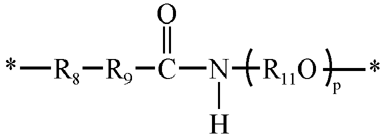

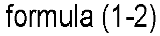

*-(CH₂)₃O-* formula (1-3)

In the formula (1-1), R₅ is a residue obtained by removing NCO group from an aliphatic or aromatic diisocyanate; m is 3~40. In the formula (1-2), R₈ is C₁-C₄ alkylene group; R₉ is -OR₁₀O- or -NH-; R₁₀ and R₁₁ are each independently C₁-C₄ alkylene group; p is 1~2.

In an embodiment, the first siloxane monomer is represented by the following formula (1A).

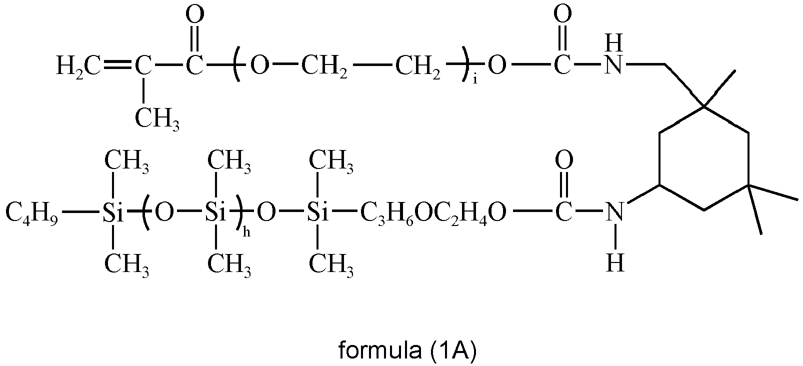

In the formula (1A), h is an integer from 4 to 80; i is an integer from 3 to 40. A number-average molecular weight of the first siloxane monomer is about 1000~10000.

In an embodiment, the first siloxane monomer is represented by the following formula (1B) or the following formula (1C).

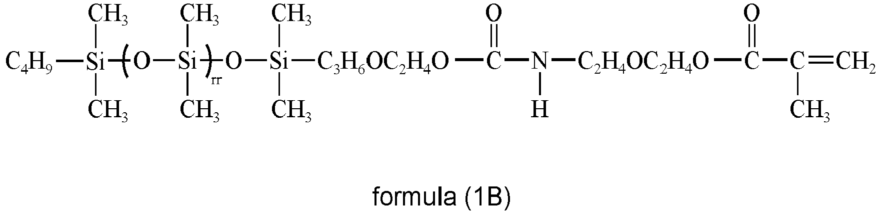

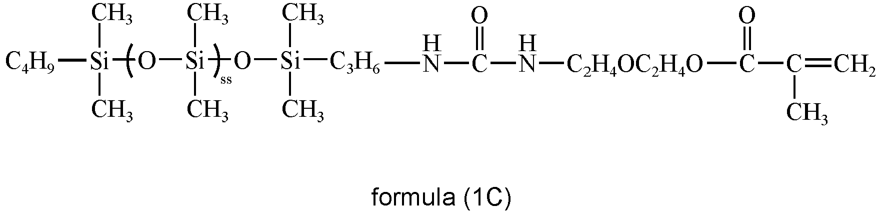

In the formula (1B), rr is an integer from 4 to 80. In the formula (1C), ss is an integer from 4 to 80.

In an embodiment, the first siloxane monomer is monomethacryloxypropyl propyl functional polydimethyl methoxy alkane. In an embodiment, the first siloxane monomer is MCR-M07 or MCR-M11 obtained from Gelest Inc., Morrisville, PA, USA.

### <Second Siloxane Monomer>

The second siloxane monomer has two acryloyl groups. For example, the acryloyl group can be represented as 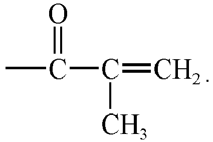 A number-average molecular weight of the second siloxane monomer is about 1000~25000. The second siloxane monomer is represented by the following formula (2) or the following formula (3).

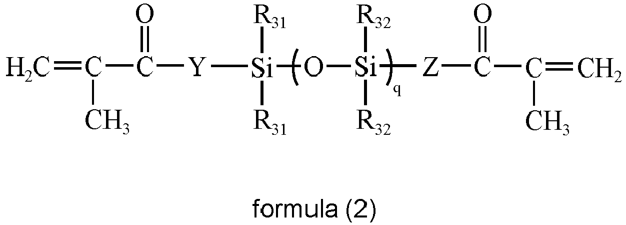

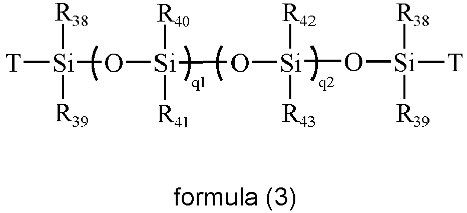

In the formula (2), R₃₁ and R₃₂ are each independently C₁-C₄ alkyl group; q is 4~120; Y is represented by the following formula (2-1) or the following formula (2-2); Z is represented by the following formula (2-3) or the following formula (2-4). In the formula (2-1) and formula (2-2), the sign * on the left of each formula represents a chemical bond with C in the formula (2), and the sign * on the right of each formula represents a chemical bond with Si in the formula (2). In the formula (2-3) and formula (2-4), the sign * on the left of each formula represents a chemical bond with Si in the formula (2), and the sign * on the right of each formula represents a chemical bond with C in the formula (2).

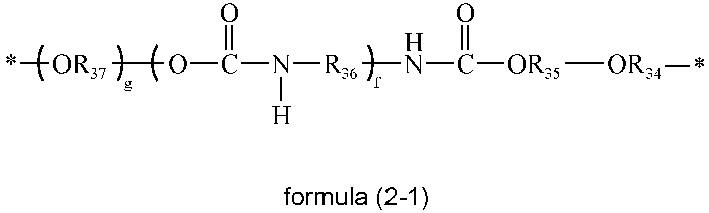

*-O-(CH₂)₃-* formula (2-2)

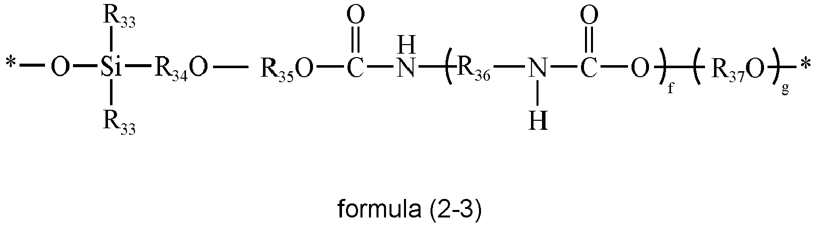

*-(CH₂)₃-O-* formula (2-4)

In the formula (2-3), R₃₃ is C₁-C₄ alkyl group. In the formula (2-1) and formula (2-3), R₃₄ is C₁-C₃ alkylene group; R₃₅ and R₃₇ are each independently C₁-C₃ alkylene group; R₃₆ is a residue obtained by removing NCO group from an aliphatic or aromatic diisocyanate; f is 0~1; g is 1~40.

In the formula (3), T is a polymerizable, free radical polymerizably active, unsaturated group bonded through a divalent hydrocarbon group; R₃₈ and R₃₉ are each independently C₁-C₂₀ hydrocarbon group or C₁-C₂₀ halogenated hydrocarbon group; R₄₀, R₄₁, R₄₂ and R₄₃ are each independently selected from a group consisting of C₁-C₂₀ monovalent hydrocarbon group, C₁-C₂₀ halogenated monovalent hydrocarbon group and a hydrophilic sidechain; q1 is 1~1000; q2 is 1~1000. The hydrophilic sidechain can be represented by the following formula (3-1) or the following formula (3-2).

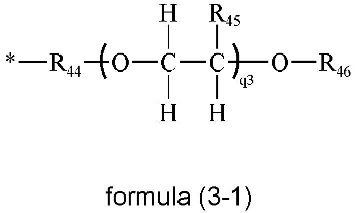

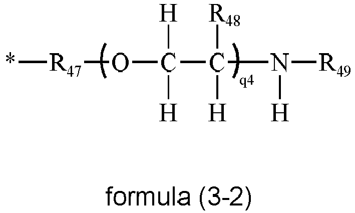

In the formula (3-1), R₄₄ is a C₁-C₁₀ divalent hydrocarbon group, R₄₅ is hydrogen or methyl, R₄₆ is selected from a group consisting of hydrogen, C₁-C₁₀ monovalent hydrocarbon group, and the group represented by the following formula (3-3), q3 is an integer greater than or equal to 1, and the sign * represents a chemical bond with Si in the formula (3). In the formula (3-2), R₄₇ is C₁-C₁₀ divalent hydrocarbon group, R₄₈ is hydrogen or methyl, R₄₉ is selected from a group consisting of hydrogen, C₁-C₁₀ monovalent hydrocarbon group, and the group represented by the following formula (3-4), q4 is an integer greater than or equal to 1, and the sign * represents a chemical bond with Si in the formula (3).

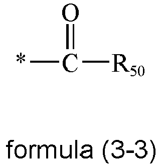

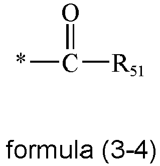

In the formula (3-3), R₅₀ is selected from a group consisting of C₁-C₁₀ monovalent hydrocarbon, hydrogen and OH, and the sign * represents a chemical bond with O in the formula (3-1). In the formula (3-4), R₅₁ is selected from a group consisting of C₁-C₁₀ monovalent hydrocarbon, hydrogen and OH, and the sign * represents a chemical bond with N in the formula (3-2).

In an embodiment, the second siloxane monomer is represented by the formula (2), Y in the formula (2) is represented by the formula (2-1), and Z in the formula (2) is represented by the formula (2-3); R₃₁ and R₃₂ are each independently C₁-C₄ alkyl group; R₃₃ is C₁-C₄ alkyl group; R₃₄ is C₁-C₃ alkylene group; R₃₅ and R₃₇ are each independently C₁-C₃ alkylene group; R₃₆ is a residue obtained by removing NCO group from an aliphatic or aromatic diisocyanate; q is an integer from 4 to 80; f is an integer from 0 to 1; g is an integer from 1 to 20. In this embodiment, a number-average molecular weight of the second siloxane monomer is about 1000~10000.

In an embodiment, the second siloxane monomer is represented by the formula (3), T is a group represented by the following formula (3-5) or the following formula (3-6), q5 in the formula (3-5) is an integer from 1 to 10, and q6 in the formula (3-6) is an integer from 1 to 10; R₃₈ and R₃₉ are each independently C₁-C₄ hydrocarbon; R₄₀, R₄₁, R₄₂ and R₄₃ are each independently selected from a group consisting of C₁-C₂₀ monovalent hydrocarbon group, C₁-C₂₀ halogenated monovalent hydrocarbon group and a hydrophilic sidechain, and at least one of R₄₀, R₄₁, R₄₂ and R₄₃ is a hydrophilic sidechain represented by the above formula (3-1) or the above formula (3-2); q1 is an integer from 1 to 300; q2 is an integer from 1 to 300. In the present embodiment, R₄₄ in the formula (3-1) is C₁-C₆ divalent hydrocarbon group, R₄₅ in the formula (3-1) is hydrogen or methyl, R₄₆ in the formula (3-1) is the group represented by the above formula (3-3) and R₅₀ is selected from a group consisting of C₁-C₄ monovalent hydrocarbon, hydrogen and OH, and q3 in the formula (3-1) is an integer from 1 to 20. In the present embodiment, R₄₇ in the formula (3-2) is C₁-C₆ divalent hydrocarbon group, R₄₈ in the formula (3-2) is hydrogen or methyl, R₄₉ in the formula (3-2) is the group represented by the above formula (3-4) and R₅₁ is selected from a group consisting of C₁-C₄ monovalent hydrocarbon, hydrogen and OH, and q4 in the formula (3-2) is an integer from 1 to 20.

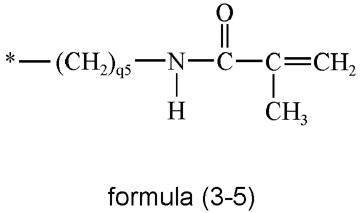

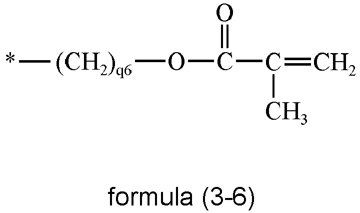

In an embodiment, the second siloxane monomer is represented by the formula (3), T is a group represented by the above formula (3-5) or the above formula (3-6), q5 in the formula (3-5) is an integer from 1 to 10, and q6 in the formula (3-6) is an integer from 1 to 10; R₃₈ and R₃₉ are each independently C₁-C₄ hydrocarbon; only one of R₄₀, R₄₁, R₄₂ and R₄₃ is a hydrophilic sidechain represented by the above formula (3-1) or the above formula (3-2), and the others of R₄₀, R₄₁, R₄₂ and R₄₃ are each independently selected from a group consisting of C₁-C₂₀ monovalent hydrocarbon group and C₁-C₂₀ halogenated monovalent hydrocarbon group; q1 is an integer from 1 to 300; q2 is an integer from 1 to 300. In the present embodiment, R₄₄ in the formula (3-1) is C₁-C₆ divalent hydrocarbon group, R₄₅ in the formula (3-1) is hydrogen or methyl, R₄₆ in the formula (3-1) is the group represented by the above formula (3-3) and R₅₀ is selected from a group consisting of C₁-C₄ monovalent hydrocarbon, hydrogen and OH, and q3 in the formula (3-1) is an integer from 1 to 20. In the present embodiment, R₄₇ in the formula (3-2) is C₁-C₆ divalent hydrocarbon group, R₄₈ in the formula (3-2) is hydrogen or methyl, R₄₉ in the formula (3-2) is the group represented by the above formula (3-4) and R₅₁ is selected from a group consisting of C₁-C₄ monovalent hydrocarbon, hydrogen and OH, and q4 in the formula (3-2) is an integer from 1 to 20.

In an embodiment, the second siloxane monomer is represented by the formula (3), T is a group represented by the above formula (3-5) or the above formula (3-6), q5 in the formula (3-5) is an integer from 1 to 10, and q6 in the formula (3-6) is an integer from 1 to 10; R₃₈ and R₃₉ are each independently C₁-C₄ hydrocarbon; R₄₀, R₄₁, R₄₂ and R₄₃ are each independently selected from a group consisting of C₁-C₂₀ monovalent hydrocarbon group, C₁-C₂₀ halogenated monovalent hydrocarbon group and a hydrophilic sidechain, and at least one of R₄₀, R₄₁, R₄₂ and R₄₃ is a hydrophilic sidechain represented by the above formula (3-1) or the above formula (3-2); q1 is an integer from 1 to 200; q2 is an integer from 1 to 200. In the present embodiment, R₄₄ in the formula (3-1) is C₁-C₆ divalent hydrocarbon group, R₄₅ in the formula (3-1) is hydrogen or methyl, R₄₆ in the formula (3-1) is the group represented by the above formula (3-3) and R₅₀ is selected from a group consisting of CH₃, H and OH, and q3 in the formula (3-1) is an integer from 1 to 20. In the present embodiment, R₄₇ in the formula (3-2) is C₁-C₆ divalent hydrocarbon group, R₄₈ in the formula (3-2) is hydrogen or methyl, R₄₉ in the formula (3-2) is the group represented by the above formula (3-4) and R₅₁ is selected from a group consisting of CH₃, H and OH, and q4 in the formula (3-2) is an integer from 1 to 20.

In an embodiment, the second siloxane monomer is represented by the formula (3), T is a group represented by the above formula (3-5) or the above formula (3-6), q5 in the formula (3-5) is an integer from 1 to 10, and q6 in the formula (3-6) is an integer from 1 to 10; R₃₈ and R₃₉ are each independently C₁-C₄ hydrocarbon; only one of R₄₀, R₄₁, R₄₂ and R₄₃ is a hydrophilic sidechain represented by the above formula (3-1) or the above formula (3-2), and the others of R₄₀, R₄₁, R₄₂ and R₄₃ are each independently selected from a group consisting of C₁-C₂₀ monovalent hydrocarbon group and C₁-C₂₀ halogenated monovalent hydrocarbon group; q1 is an integer from 1 to 200; q2 is an integer from 1 to 200. In the present embodiment, R₄₄ in the formula (3-1) is C₁-C₆ divalent hydrocarbon group, R₄₅ in the formula (3-1) is hydrogen or methyl, R₄₆ in the formula (3-1) is the group represented by the above formula (3-3) and R₅₀ is selected from a group consisting of CH₃, H and OH, and q3 in the formula (3-1) is an integer from 1 to 20. In the present embodiment, R₄₇ in the formula (3-2) is C₁-C₆ divalent hydrocarbon group, R₄₈ in the formula (3-2) is hydrogen or methyl, R₄₉ in the formula (3-2) is the group represented by the above formula (3-4) and R₅₁ is selected from a group consisting of CH₃, H and OH, and q4 in the formula (3-2) is an integer from 1 to 20.

In an embodiment, the second siloxane monomer is represented by the following formula (2A).

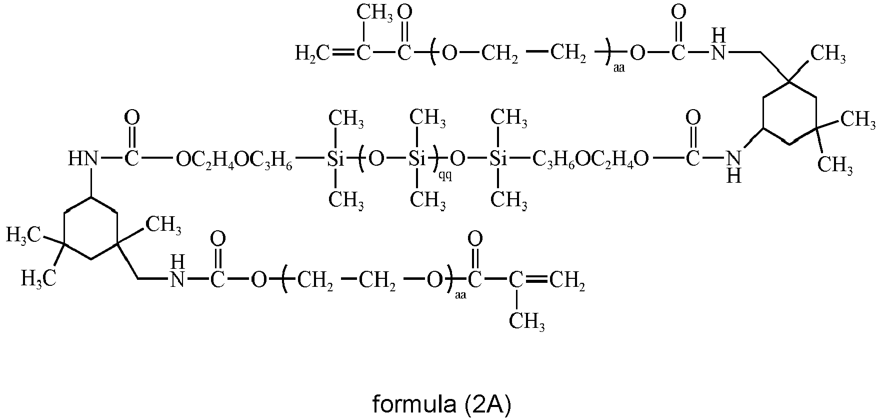

In the formula (2A), qq is an integer from 4 to 80; aa is an integer from 3 to 40. In this embodiment, a number-average molecular weight of the second siloxane monomer is about 1000~10000.

In an embodiment, the second siloxane monomer is represented by the following formula (2B).

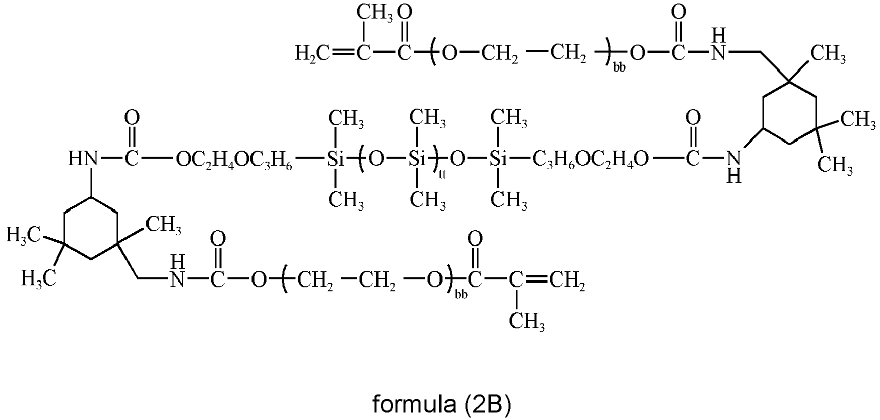

In the formula (2B), tt is an integer from 4 to 80; bb is an integer from 1 to 10. In this embodiment, a number-average molecular weight of the second siloxane monomer is about 1000~10000.

In an embodiment, the second siloxane monomer is represented by the following formula (2C).

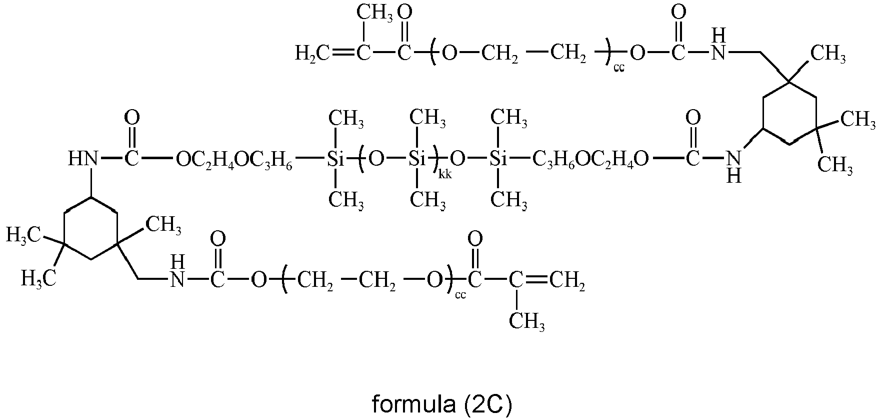

In the formula (2C), kk is an integer from 80 to 160; cc is an integer from 5 to 40. In this embodiment, a number-average molecular weight of the second siloxane monomer is about 1000~20000.

In an embodiment, the second siloxane monomer is represented by the following formula (2D).

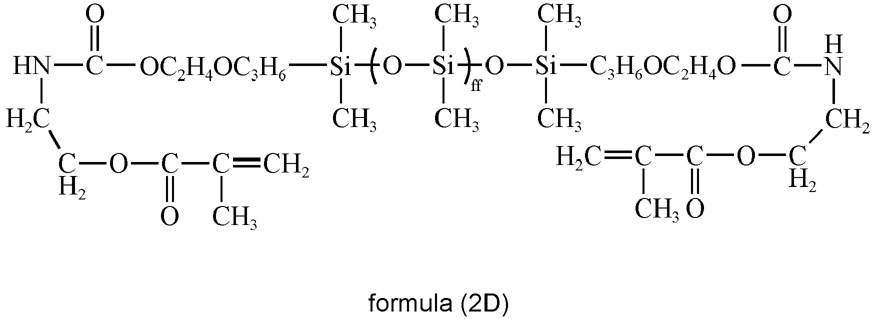

In the formula (2D), ff is an integer from 4 to 80. In this embodiment, a number-average molecular weight of the second siloxane monomer is about 1000~10000.

In an embodiment, the second siloxane monomer is represented by the following formula (3A).

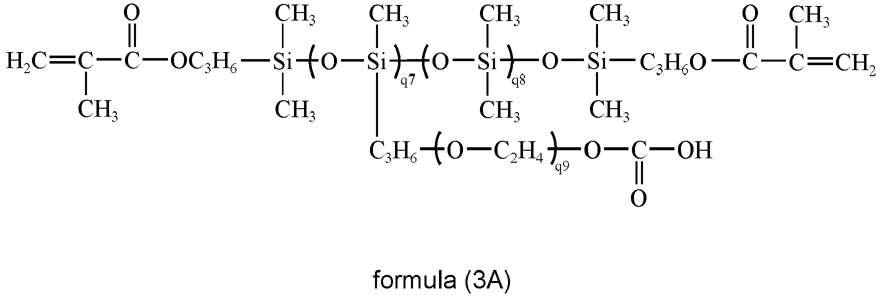

In the formula (3A), q7 is an integer from 1 to 150, q8 is an integer from 1 to 150, and q9 is an integer from 1 to 15. In this embodiment, a number-average molecular weight of the second siloxane monomer is about 1000~20000.

In an embodiment, the second siloxane monomer is represented by the following formula (3B).

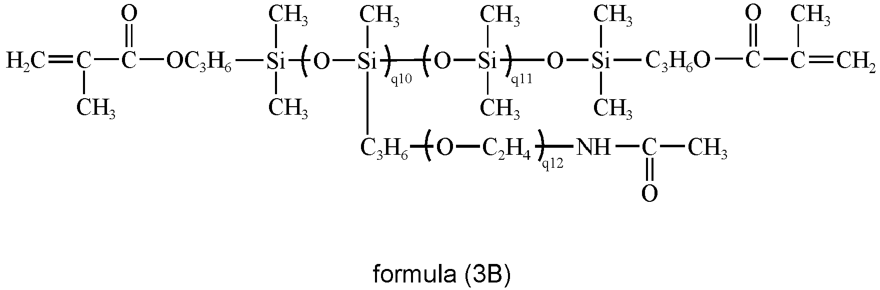

In the formula (3B), q10 is an integer from 1 to 150, q11 is an integer from 1 to 150, and q12 is an integer from 1 to 15. In this embodiment, a number-average molecular weight of the second siloxane monomer is about 1000~20000.

In an embodiment, the second siloxane monomer is difunctional acrylate-containing siloxane monomer methacryloxypropyl propyl terminated polydimethyl siloxanes. In an embodiment, the second siloxane monomer is DMS-R18, DMS-R22 or DMS-R31 obtained from Gelest Inc., Morrisville, PA, USA.

In an embodiment, the first siloxane monomer is in a range of 50 wt% to 91 wt%, and the second siloxane monomer is in a range of 9 wt% to 50 wt% based on the total weight of the siloxane mixture. In an embodiment, the first siloxane monomer is in a range of 60 wt% to 91 wt%, and the second siloxane monomer is in a range of 9 wt% to 40 wt% based on the total weight of the siloxane mixture. In an embodiment, the first siloxane monomer is in a range of 70 wt% to 91 wt%, and the second siloxane monomer is in a range of 9 wt% to 30 wt% based on the total weight of the siloxane mixture. In other embodiments, the siloxane mixture includes two or more different siloxane monomers.

The siloxane mixture is in a range of 10 wt% to 55 wt% based on the total weight of the composition for contact lens. Preferably, the siloxane mixture is in a range of 14 wt% to 45 wt% based on the total weight of the composition for contact lens.

### <Tris(trimethylsiloxy)silypropyl methacrylate (TRIS)>

The tris(trimethylsiloxy)silypropyl methacrylate can be represented by the following formula (4).

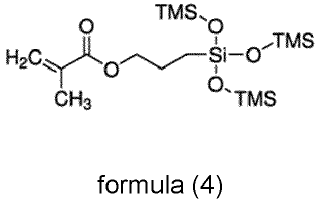

The tris(trimethylsiloxy)silypropyl methacrylate is in a range of 2 wt% to 34 wt% based on the total weight of the composition for contact lens. Preferably, the tris(trimethylsiloxy)silypropyl methacrylate is in a range of 4 wt% to 34 wt% based on the total weight of the composition for contact lens. In the case that the tris(trimethylsiloxy)silypropyl methacrylate is less than 2 wt% based on the total weight of the composition, the mechanical strength of the contact lens made from this composition is poor and the elongation thereof is too low. In the case that the tris(trimethylsiloxy)silypropyl methacrylate is more than 34 wt% based on the total weight of the composition, the mechanical strength of the contact lens made from this composition is decreased.

In an embodiment, in the composition for contact lens, a weight ratio of the siloxane mixture to the tris(trimethylsiloxy)silypropyl methacrylate is between about 27.5:1 and about 0.29:1. In an embodiment, in the composition for contact lens, a weight ratio of the siloxane mixture to the tris(trimethylsiloxy)silypropyl methacrylate is between about 9:1 and about 3:7. For example, in the composition for contact lens, a weight ratio of the siloxane mixture to the tris(trimethylsiloxy)silypropyl methacrylate may be about 9:1, about 3:2, or about 3:7.

### <Hydrophilic Monomer>

The hydrophilic monomer may be one or more materials selected from a group consisting of 2-hydroxyethyl methacrylate (HEMA), methyl methacrylate (MMA), methacrylic acid (MAA), N-vinyl pyrrolidone (NVP), N,N-dimethyl-acrylamide (DMA), 4-acryloylmorpholine (AcMO), 2-hydroxyethyl acrylamide (HEAA), glyceryl methacrylate (GMA), glycerol mono-methacrylate (GMMA), acrylic acid (AA), N,N-di(methyl methacryl-amide) (DMA), N-vinyl-N-methyl acetamide, glycine vinyl carbonate, hexafluoroisopropyl methacrylate (HFMA), 2-methacryloyloxyethyl phosphorylcholine, and 2-hydroxy-butyl methacrylate. In an embodiment, the hydrophilic monomer is one or more materials selected from a group consisting of 2-hydroxyethyl methacrylate (HEMA), N-vinyl pyrrolidone (NVP) and hexafluoroisopropyl methacrylate (HFMA). In an embodiment, the hydrophilic monomer includes 2-hydroxyethyl methacrylate (HEMA) and N-vinyl pyrrolidone (NVP). In an embodiment, the hydrophilic monomer includes 2-hydroxyethyl methacrylate (HEMA), N-vinyl pyrrolidone (NVP) and 4-acryloylmorpholine (AcMO). In an embodiment, the hydrophilic monomer includes 2-hydroxyethyl methacrylate (HEMA), N-vinyl pyrrolidone (NVP) and hexafluoroisopropyl methacrylate (HFMA). In an embodiment, the hydrophilic monomer includes 2-hydroxyethyl methacrylate (HEMA), N-vinyl pyrrolidone (NVP) and N,N-di(methyl meth acryl-amide) (DMA). In an embodiment, the hydrophilic monomer includes 2-hydroxyethyl methacrylate (HEMA), methacrylic acid (MAA) and methyl methacrylate (MMA).

The hydrophilic monomer is in a range of 45 wt% to 54 wt% based on the total weight of the composition for contact lens. Preferably, the hydrophilic monomer is in a range of 49 wt% to 51 wt% based on the total weight of the composition for contact lens.

In an embodiment, the composition for contact lens further includes an ultraviolet absorbing agent, a thermal initiator and/or blue light absorbing agent.

### <Ultraviolet Absorbing Agent>

The ultraviolet absorbing agent may be one or more materials selected from a group consisting of 2-[3-(2H-benzotriazol-2-yl)-4-hydroxyphenyl]ethyl-2-methacrylate, 2-(4-benzyl-3-hydroxyphenoxy)ethyl acrylate, and N-(4-hydroxy-3(5-methoxy-2H-benzo[d][1,2,3]triazol-2-yl) phenyl)methacrylamide. In an embodiment, the ultraviolet absorbing agent is 2-[3-(2H-benzotriazol-2-yl)-4-hydroxyphenyl]ethyl-2-methacrylate.

The ultraviolet absorbing agent is in a range of 0.5 wt% to 2.5 wt% based on the total weight of the composition for contact lens.

### <Thermal Initiator>

The thermal initiator may be one or more materials selected from a group consisting of azobisisobutyronitrile, 2,2'-Azo-bis-(2-methylbutyronitrile), and azobisisoheptanenitrile. In an embodiment, the thermal initiator is azobisisobutyronitrile.

The thermal initiator is in a range of 0.45 wt% to 0.75 wt% based on the total weight of the composition for contact lens.

### <Blue Light Absorbing Agent>

The blue light absorbing agent may be one or more materials selected from a group consisting of Reactive Yellow 15, Reactive Yellow 15 with modification, Reactive Yellow 86, (E)-4-Methacryloyloxyazobenzene (Y7), 2-(4-acetyl-3-amino-2,6-dimethoxyphenoxy)ethyl methacrylate, 2-(4-amino-3-propionylphenoxy)ethyl methacrylate, 2-((1-amino-8-oxo-5,6,7,8-tetrahydronaphthalen-2-yl)oxy)ethyl methacrylate, and 2-(2-(3-(tert-butyl)-4-hydroxy-5-(1,10-phenanthrolin-2-yl)phenyl)acetoxy)ethyl methacrylate.

The Reactive Yellow 15 is represented by the following formula (5-1).

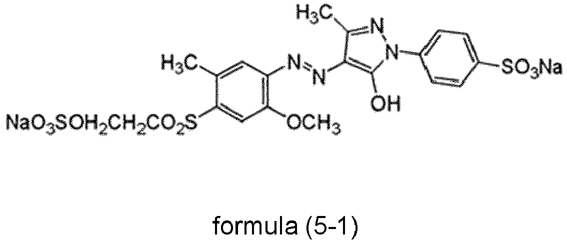

The Reactive Yellow 15 with modification is represented by the following formula (5-2).

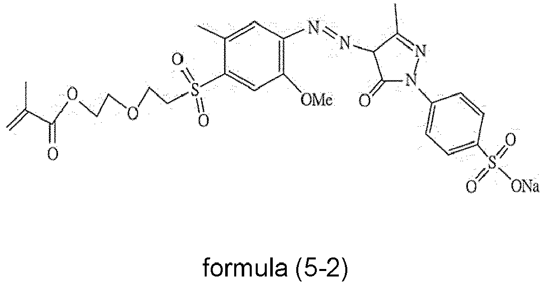

The Reactive Yellow 86 is represented by the following formula (5-3).

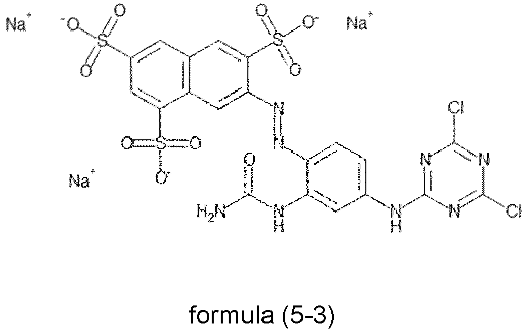

The (E)-4-Methacryloyloxyazobenzene is represented by the following formula (5-4).

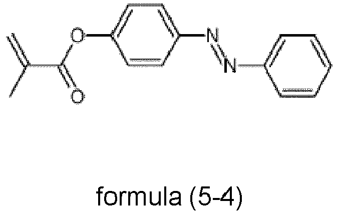

The 2-(4-acetyl-3-amino-2,6-dimethoxyphenoxy)ethyl methacrylate is represented by the following formula (5-5).

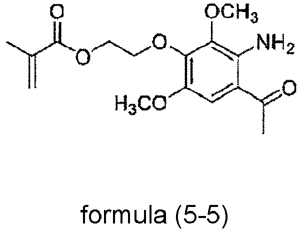

The 2-(4-amino-3-propionylphenoxy)ethyl methacrylate is represented by the following formula (5-6).

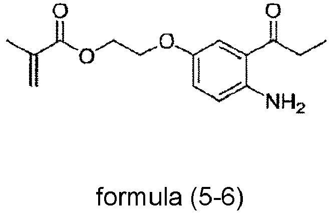

The 2-((1-amino-8-oxo-5,6,7,8-tetrahydronaphthalen-2-yl)oxy)ethyl methacrylate is represented by the following formula (5-7).

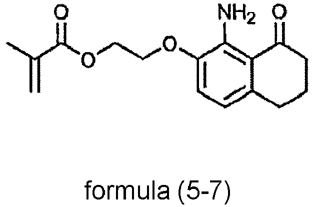

The 2-(2-(3-(tert-butyl)-4-hydroxy-5-(1,10-phenanthrolin-2-yl)phenyl)acetoxy)ethyl methacrylate is represented by the following formula (5-8).

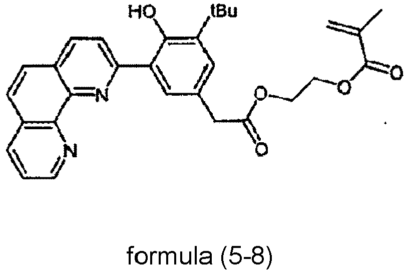

### <Other Additives>

In an embodiment, the composition for contact lens further includes other additives as required. The additives include, but are not limited to, dyes.

The above components may be mixed in specific proportions to form a composition for contact lens. For example, the composition for contact lens may be a clear solution or a colored solution.

According to an embodiment, a contact lens is provided. The composition for contact lens provided by the present disclosure may be put into a contact lens mold, and each component in the composition may be reacted by heating or exposing to light to form a contact lens. The heating temperature may be between about 30 °C and about 150 °C, and reaction time may be between about 1 hour and 12 hours. In an embodiment, the heating process may be performed at 30~70 °C for 0~2 hours, 70~100 °C for 2-4 hours and 100~150 °C for 4~12 hours.

In an embodiment, the method for forming a contact lens further includes a hydration process. The hydration process may include soaking the contact lens in alcohol and pure water, and then put the contact lens in a buffer solution to be equilibria.

The present disclosure will be explained in further detail with reference to the examples. However, the present disclosure is not limited to these examples.

The contact lens of the present disclosure has high oxygen permeability and high elongation. In an embodiment, the contact lens has an oxygen permeability of greater than 80 barrer and an elongation of greater than 270%. In an embodiment, the contact lens has an oxygen permeability of about 80~108 barrer and an elongation of about 270%~470%. For example, the contact lens may be a silicone hydrogel contact lens.

A composition for contact lens is formed by mixing the components according to the content (wt%) shown in the following Table 1. The composition for contact lens is put into a contact lens mold, and then a heating process is performed to the composition to form a contact lens. In the Table 1, the siloxane mixture includes the first siloxane monomer represented by the following formula (1A) and the second siloxane monomer represented by the formula (2A) or formula (2B) or formula (3A) or formula (3B); the ultraviolet absorbing agent is 2-[3-(2H-benzotriazol-2-yl)-4-hydroxyphenyl]ethyl-2-methacrylate; the thermal initiator is azobisisobutyronitrile.

**[Table 1]**

| | Example | | | Comparative Example |
|---|---|---|---|---|
| | 1 | 2 | 3 | 1 |
| siloxane mixture (wt%) | 43.01 | 28.67 | 14.48 | 48.30 |
| tris(trimethylsiloxy)silypropyl methacrylate (wt%) | 4.76 | 19.10 | 33.82 | 0 |
| hydrophilic monomer (wt%) | 49.76 | 49.76 | 50.46 | 50.46 |
| ultraviolet absorbing agent (wt%) | 1.78 | 1.78 | 0.70 | 0.70 |
| thermal initiator (wt%) | 0.69 | 0.69 | 0.54 | 0.54 |
| a weight ratio of the siloxane mixture to the tris(trimethylsiloxy)silypropyl methacrylate | About 9:1 | About 3:2 | About 3:7 | -- |

The oxygen permeability and elongation of the contact lenses of Example 1, Example 2, Example 3 and Comparative Example 1 are evaluated. The oxygen permeability and elongation can be measured using conventional methods well known in the art to which the present disclosure pertains. The elongation shown below is determined using a tensile tester based on American Society for Testing and Materials (ASTM) standard D1708-18. The oxygen permeability shown below is determined using an O₂ Permeometer based on the method for testing oxygen permeability according to ISO 18369-4. The unit of the oxygen permeability is barrer [10⁻¹¹ (cm²/sec)(ml O₂/ml · mmHg].

**[Table 2]**

| | Example | | | Comparative Example |
|---|---|---|---|---|
| | 1 | 2 | 3 | 1 |
| elongation (%) | 338.00 | 465.00 | 272.70 | 247.00 |
| oxygen permeability (barrer) | 105.9 | 91.9 | 82.3 | 111.8 |

As shown in Table 2, each of the contact lenses of Examples 1~3 of the present disclosure has an oxygen permeability of greater than 80 barrer and an elongation of greater than 270%. As compared with the contact lens of the comparative example, which has a low elongation and has the problem of being easily broken, the elongation of the contact lenses of the present disclosure is higher, that is, the contact lenses of the present disclosure are less likely to break when they are stretched by external force. Moreover, the contact lenses of the present disclosure still maintain high oxygen permeability, and thus they are comfortable to wear. Therefore, the composition for contact lens of the present disclosure shows high oxygen permeability and excellent mechanical property (high elongation), and has the advantages of being durable, not easily broken, and comfortable to wear.

While the disclosure has been described by way of example and in terms of the exemplary embodiment(s), it is to be understood that the disclosure is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A composition for a contact lens, comprising:
a siloxane mixture comprising a first siloxane monomer and a second siloxane monomer, wherein the first siloxane monomer has an acryloyl group, and the second siloxane monomer has two acryloyl groups;
a tris(trimethylsiloxy)silypropyl methacrylate; and
a hydrophilic monomer,
wherein a weight ratio of the siloxane mixture to the tris(trimethylsiloxy)silypropyl methacrylate is between about 27.5:1 and about 0.29:1.

2. The composition according to claim 1, wherein the first siloxane monomer is represented by the following formula (1), and the second siloxane monomer is represented by the following formula (2), 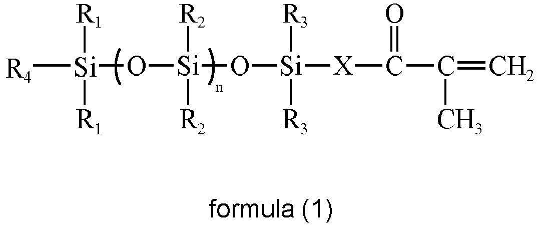 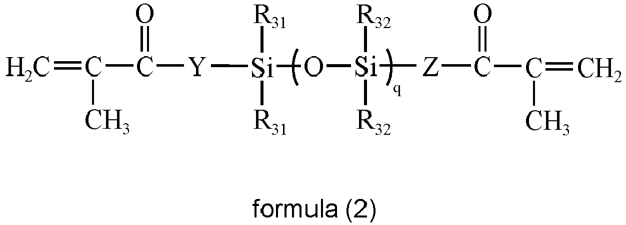 wherein, in the formula (1),
R₁, R₂ and R₃ are each independently C₁-C₄ alkyl group,
R₄ is C₁-C₆ alkyl group,
n is 4~80,
X is represented by the following formula (1-1), the following formula (1-2), or the following formula (1-3), 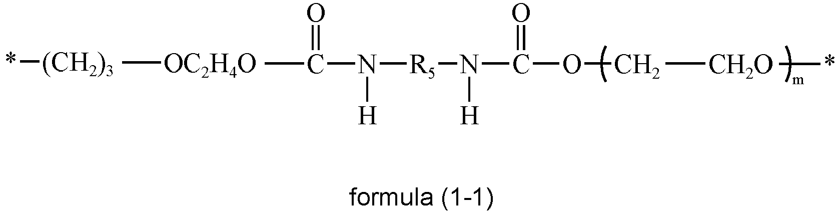 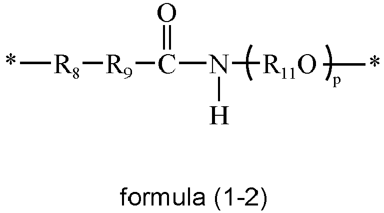
*-(CH₂)₃O-* formula (1-3)
wherein, in the formula (1-1), R₅ is a residue obtained by removing NCO group from an aliphatic or aromatic diisocyanate, m is 3~40,
in the formula (1-2), R₈ is C₁-C₄ alkylene group, R₉ is -OR₁₀O- or -NH-, R₁₀ and R₁₁ are each independently C₁-C₄ alkylene group, p is 1~2,
in the formula (2),
R₃₁ and R₃₂ are each independently C₁-C₄ alkyl group,
q is 4~120,
Y is represented by the following formula (2-1) or the following formula (2-2),
Z is represented by the following formula (2-3) or the following formula (2-4), 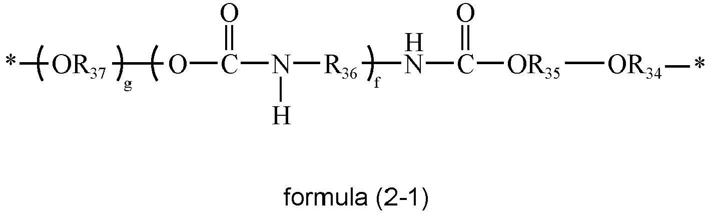
*-O-(CH₂)₃-* formula (2-2) 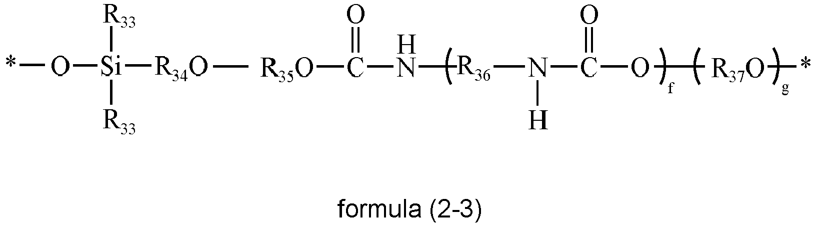
*-(CH₂)₃-O-* formula (2-4)
in the formula (2-3), R₃₃ is C₁-C₄ alkyl group,
in the formula (2-1) and formula (2-3), R₃₄ is C₁-C₃ alkylene group, R₃₅ and R₃₇ are each independently C₁-C₃ alkylene group, R₃₆ is a residue obtained by removing NCO group from an aliphatic or aromatic diisocyanate, f is 0~1, g is 1~40.

3. The composition according to claim 1, wherein the first siloxane monomer is represented by the following formula (1), and the second siloxane monomer is represented by the following formula (3), 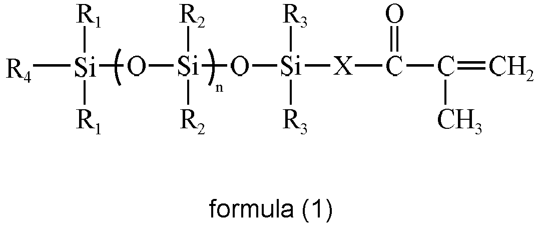 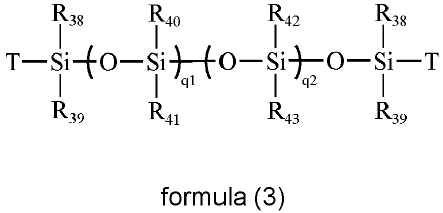 wherein, in the formula (1),
R₁, R₂ and R₃ are each independently C₁-C₄ alkyl group,
R₄ is C₁-C₆ alkyl group,
n is 4~80,
X is represented by the following formula (1-1), the following formula (1-2), or the following formula (1-3), 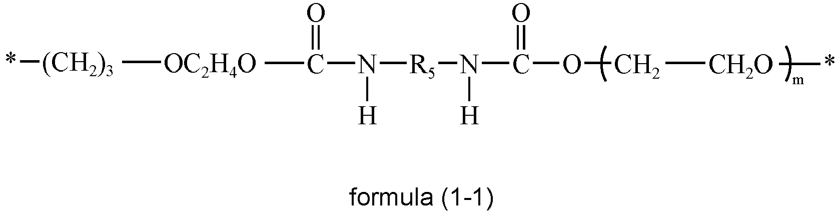 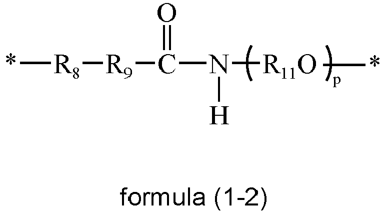
*-(CH₂)₃O-* formula (1-3)
wherein, in the formula (1-1), R₅ is a residue obtained by removing NCO group from an aliphatic or aromatic diisocyanate, m is 3~40,
in the formula (1-2), R₈ is C₁-C₄ alkylene group, R₉ is -OR₁₀O- or -NH-, R₁₀ and R₁₁ are each independently C₁-C₄ alkylene group, p is 1~2,
in the formula (3),
q1 is an integer from 1 to 300,
q2 is an integer from 1 to 300,
R₃₈ and R₃₉ are each independently C₁-C₄ hydrocarbon,
R₄₀, R₄₁, R₄₂ and R₄₃ are each independently selected from a group consisting of C₁-C₂₀ monovalent hydrocarbon group, C₁-C₂₀ halogenated monovalent hydrocarbon group and a hydrophilic sidechain, and at least one of R₄₀, R₄₁, R₄₂ and R₄₃ is a hydrophilic sidechain represented by the following formula (3-1) or the following formula (3-2), 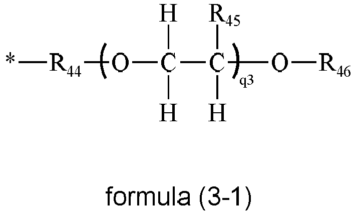 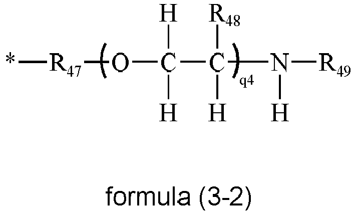
R₄₄ in the formula (3-1) is C₁-C₆ divalent hydrocarbon group,
R₄₅ in the formula (3-1) is hydrogen or methyl,
R₄₆ in the formula (3-1) is the group represented by the following formula (3-3) and R₅₀ is selected from a group consisting of C₁-C₄ monovalent hydrocarbon, hydrogen and OH,
q3 in the formula (3-1) is an integer from 1 to 20, 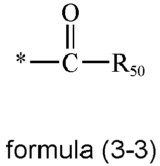
R₄₇ in the formula (3-2) is C₁-C₆ divalent hydrocarbon group,
R₄₈ in the formula (3-2) is hydrogen or methyl,
R₄₉ in the formula (3-2) is the group represented by the following formula (3-4) and R₅₁ is selected from a group consisting of C₁-C₄ monovalent hydrocarbon, hydrogen and OH,
q4 in the formula (3-2) is an integer from 1 to 20, 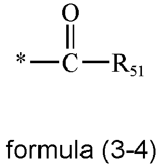 in the formula (3), T is a group represented by the following formula (3-5) or the following formula (3-6), 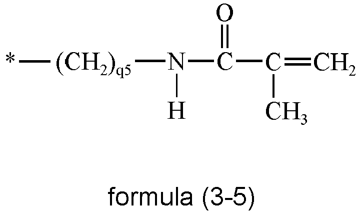 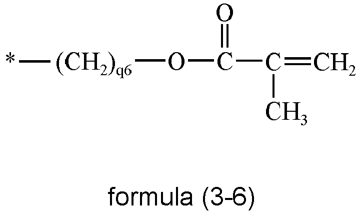
q5 in the formula (3-5) is an integer from 1 to 10,
q6 in the formula (3-6) is an integer from 1 to 10.

4. The composition according to any one of claims 1 to 3, wherein the hydrophilic monomer is one or more materials selected from a group consisting of 2-hydroxyethyl methacrylate (HEMA), methyl methacrylate (MMA), methacrylic acid (MAA), N-vinyl pyrrolidone (NVP), N,N-dimethyl-acrylamide (DMA), 4-acryloylmorpholine (AcMO), 2-hydroxyethyl acrylamide (HEAA), glyceryl methacrylate (GMA), glycerol mono-methacrylate (GMMA), acrylic acid (AA), N,N-di(methyl methacryl-amide) (DMA), N-vinyl-N-methyl acetamide, glycine vinyl carbonate, hexafluoroisopropyl methacrylate (HFMA), 2-methacryloyloxyethyl phosphorylcholine, and 2-hydroxy-butyl methacrylate.

5. The composition according to any one of claims 1 to 4, wherein a number-average molecular weight of the first siloxane monomer is about 500~10000, and a number-average molecular weight of the second siloxane monomer is about 1000~25000.

6. The composition according to any one of claims 1 to 5, further comprising an ultraviolet absorbing agent, wherein the ultraviolet absorbing agent is one or more materials selected from a group consisting of 2-[3-(2H-benzotriazol-2-yl)-4-hydroxyphenyl]ethyl-2-methacrylate, 2-(4-benzyl-3-hydroxyphenoxy)ethyl acrylate, and N-(4-hydroxy-3(5-methoxy-2H-benzo[d][1,2,3]triazol-2-yl) phenyl)methacrylamide.

7. The composition according to any one of claims 1 to 6, further comprising a thermal initiator, wherein the thermal initiator is one or more materials selected from a group consisting of azobisisobutyronitrile, 2,2'-Azo-bis-(2-methylbutyronitrile), and azobisisoheptanenitrile.

8. The composition according to any one of claims 1 to 7, further comprising a dye or a blue light absorbing agent.

9. The composition according to claim 8, wherein the blue light absorbing agent is one or more materials selected from a group consisting of Reactive Yellow 15, Reactive Yellow 15 with modification, Reactive Yellow 86, (E)-4-Methacryloyloxyazobenzene (Y7), 2-(4-acetyl-3-amino-2,6-dimethoxyphenoxy)ethyl methacrylate, 2-(4-amino-3-propionylphenoxy)ethyl methacrylate, 2-((1-amino-8-oxo-5,6,7,8-tetrahydronaphthalen-2-yl)oxy)ethyl methacrylate, and 2-(2-(3-(tert-butyl)-4-hydroxy-5-(1,10-phenanthrolin-2-yl)phenyl)acetoxy)ethyl methacrylate.

10. A contact lens made from a composition according to any of claims 1 to 9.

11. The contact lens according to claim 10, wherein the contact lens has an oxygen permeability of greater than 80 barrer and an elongation of greater than 270%.
